# EUROPÄISCHE PATENTANMELDUNG

(11) **EP 0 708 123 A2**
(43) Veröffentlichungstag der Anmeldung: **24.04.1996**
(21) Anmeldenummer: 95115239.6
(22) Anmeldetag: 27.09.1995
(51) Int. Cl.: C08G 2/00, C08G 2/04, C08G 2/28

(54) **Polyacetalformmasse mit niedriger Schmelzviskosität**

(30) Priorität: 10.10.1994 DE 4436107; 24.04.1995 DE 19515000
(71) Anmelder: HOECHST AKTIENGESELLSCHAFT, D-65929 Frankfurt am Main (DE)
(72) Erfinder: Czyborra, Ludger, Dr., D-52064 Aachen (DE); Kurz, Klaus, Dr., D-65451 Kelsterbach (DE); Mück, Karl-Friedrich, Dr., D-65207 Wiewsbaden (DE)

(57) **Zusammenfassung**

Die Erfindung betrifft eine Formmasse aus linearen Acetalhomo- oder - copolymeren und üblichen Zusatzstoffen, deren Schmelzflußindex MFI bei 2,16 kg Auflagegewicht und 190°C Meßtemperatur ≧ 150 g/10 min beträgt.

## Beschreibung

Die vorliegende Erfindung betrifft eine Polyacetalformmasse mit verbessertem Schmelzflußverhalten.

Thermoplastische Formmassen aus Acetalhomo- und -copolymeren wie Polyoxymethylen werden seit langem als vielseitige Werkstoffe vor allem im technischen Bereich häufig eingesetzt.

Sie eignen sich wegen ihrer hervorragenden mechanischen Eigenschaften, wie hoher Steifigkeit, Härte und Festigkeit sowie der Möglichkeit, Formteile und Formkörper in engen Toleranzgrenzen herzustellen, und wegen ihrer guten Beständigkeit gegenüber vielen Chemikalien vielfach sogar als Metallersatz. Für eine Reihe von Spezialanwendungen wie dünnwandige Spritzgußteile oder Fasern mit geringem Durchmesser weisen sie allerdings ein noch verbesserungswürdiges Schmelzflußverhalten auf.

So ist es für das Spritzgußverfahren immer wesentlich, eine Polymerschmelze zur Verfügung zu haben, die eine niedrige Viskosität besitzt und sich deshalb in der Spritzgußform gleichmäßig verteilt. Außerdem ist die niedrige Viskosität der Polymerschmelze eine grundsätzliche Voraussetzung bei der Verarbeitung thermoplastischer Polymere durch sehr feine Düsen.

Es bestand daher die Aufgabe, die Schmelzviskosität von Polyacetalformmassen zu erniedrigen, ohne die Nachteile - z.B. infolge einer Zumischung von Fremdstoffen - hinnehmen zu müssen. Weiterhin sollte die gute Chemikalienbeständigkeit der unmodifizierten Polyacetale erreicht werden. Gleichzeitig sollten die Verarbeitungsmöglichkeiten des Materials mit den für Polyacetale üblichen Methoden wie Spritzguß oder Extrusion optimiert sein.

Die Aufgabe wurde durch die eingangs genannte Formmasse gelöst, deren Kennzeichenmerkmal darin zu sehen ist, daß die Formmasse einen Schmelzflußindex MFI_{190°C/2,16 kg} von ≧ 150 g/10 min besitzt. Polyacetale der erfindungsgemäßen Art besitzen vorzugsweise einen Schmelzflußindex im Bereich von 170 bis 3000 g/10 min, besonders bevorzugt im Bereich von 300 bis 1600 g/10 min.

Unter der Bezeichnung Polyacetale werden thermoplastische Polymere verstanden, die sich durch Oxymethylengruppen als Wiederholungseinheiten auszeichnen. Die allgemeine Bezeichnung Polyoxymethylen schließt alle Polymeren mit ein, die über 50 % an wiederkehrenden Einheiten der chemischen Struktur -(CH₂O)- enthalten, also nicht nur reine Homopolymere sondern auch Co- und Terpolymere.

Die Formmasse gemäß der Erfindung kann gegebenenfalls noch bekannte, übliche Zusatzstoffe wie Stabilisatoren, Nukleierungsmittel, Antistatika, Licht- und Flammschutzmittel, Gleit- und Schmiermittel, Weichmacher, Pigmente, Farbstoffe, optische Aufheller, Verarbeitungshilfsmittel und dergleichen enthalten, deren Menge bis zu 10 Gew.%, vorzugsweise bis zu 5 Gew.-%, bezogen auf die Gesamtmischung, betragen kann.

Die Werte für die reduzierte spezifische Viskosität (als RSV-Wert bezeichnet) des Polyoxymethylens betragen bei den Handelsprodukten im allgemeinen 0,3 bis 2,0 dl/g (gemessen in γ-Butyrolacton, stabilisiert mit 0,5 Gew.% Diphenylamin, bei 140°C in einer Konzentration von 0,5g/100 ml). Die erfindungsgemäßen Formmassen weisen dagegen RSV-Werte von kleiner/gleich 0,3 dl/g auf.

Die erfindungsgemäßen Formmassen können auf den üblichen, kontinuierlich arbeitenden Produktionsmaschinen mit den bekannten Initiatoren und gegebenenfalls mit Comonomeren hergestellt werden. Als Initiatoren bei dem Verfahren gemäß der Erfindung werden die bereits aus der DE-OS 27 35 946 bekannten und mehrfach beschriebenen Initiatoren wie Lewis-Säuren, Protonensäuren, Ester und Anhydride von Protonensäuren oder Komplexverbindungen oder salzartige Verbindungen von Lewis-Säuren eingesetzt. Als Comonomere können cyclische Ether wie Ethylenoxid und/oder cyclische Acetale wie Dioxolan oder Butandiolformal Verwendung finden. Besonders vorteilhaft ist die Verwendung von Comonomeren, die in der Polymerkette zu einer C₂-Einheit führen. Vorzugsweise wird Dioxolan als Comonomeres eingesetzt. Der Anteil der Comonomeren am Reaktionsgemisch beträgt 0,1 bis 10 Mol%, vorzugsweise 0,5 bis 8 Mol% und insbesondere 1 bis 6 Mol%.

Die Oxymethylenpolymeren werden in bekannter Weise durch Polymerisation der Monomeren in Masse, Suspension, Lösung oder homogener Phase in Gegenwart von kationisch wirksamen Initiatoren hergestellt.

Für die Herstellung von Oxymethylencopolymeren mit bestimmten mittleren Molekulargewichten ist es zweckmäßig, die Polymerisationsreaktion in Gegenwart eines Reglers durchzuführen. Hierfür eignen sich vor allem Dialkylacetale des Formaldehyds und deren Oligomere mit 3 bis 9, vorzugsweise 3 oder 5 Kohlenstoffatomen, z.B. Formaldehyddimethyl-, -diethyl-, -dipropyl- und -dibutylacetal, sowie niedere aliphatische Alkohole, vorzugsweise mit 1 bis 4 Kohlenstoffatomen. Der Regler wird vorzugsweise in einer Menge bis zu 2 Gew.-%, insbesondere von 0,1 bis 1,5 Gew.-%, besonders bevorzugt von 0,3 bis 1,2 Gew.-%, bezogen auf das Gesamtgewicht der zu polymerisierenden Monomeren, zugesetzt.

Eine weitere Möglichkeit zur Herstellung der erfindungsgemäßen Formmassen ist an ein in der DE-A 27 35 946 beschriebenes Verfahren angelehnt. Beim Abkühlen einer heißen Polyoxymethylenlösung entstehen durch Fällung feste Polymerpartikel mit unterschiedlicher Korngröße. Bis zu 20 % der Polymerpartikel fallen als feinkörnige Teilchen mit einem mittleren Korndurchmesser von vorzugsweise ≦ 70 µm an. Durch bekannte Methoden, wie Filtrieren, Zentrifugieren oder Dekantieren, erhält man das als Feinanteil bezeichnete Produkt, welches im entsprechenden Filtrat, Zentrifugat oder Dekantat vorliegt. Die Abtrennung des Lösungsmittels und die Trocknung des Feinanteils erfolgen nach bekannten Verfahren, beispielsweise durch Gefriertrocknung, Sprühtrocknung, Vakuumverdampfung, Kontakttrocknung, Wirbelschichttrocknung oder kombinierten Trocknungsverfahren. Bei näherer Untersuchung des so gewonnenen Feinanteils stellte sich überraschenderweise heraus, daß die Fraktionierung nach Teilchengröße mit einer entsprechenden Fraktionierung nach dem Molekulargewicht einhergeht. Das mittlere Molekulargewicht des Feinanteils ist niedrig, dadurch sind diese Polymere besonders leicht fließend. Der Schmelzindex des Feinanteils ist darüber hinaus davon abhängig, welchen MFI-Wert das zur fraktionierten Fällung eingesetzte Polymer aufweist. So führt ein Polymer mit einem hohen MFI-Wert zu einem Feinanteil mit entsprechend hohen MFI-Werten bzw. bei Verwendung eines hochmolekularen Polymeren erhält man entsprechend hochmolekularen Feinanteil.

Die erfindungsgemäßen Formmassen können vorteilhafterweise besser als die handelsüblichen Polyacetale durch Spritzguß oder Extrusion durch feine Düsen verarbeitet werden. Der zur Formfüllung notwendige maschinenseitige Druck ist niedriger als bei den bisher bekannten Materialien, so daß Formteile mit komplizierter Geometrie, die bisher nicht vollständig gefüllt wurden, jetzt gefertigt werden können.

Die nachfolgenden Beispiele sollen die Erfindung für den Fachmann noch deutlicher erläutern, ohne die Erfindung auf die dargestellten Ausführungsformen zu beschränken.

### Beispiele

Die in den folgenden Beispielen angegebenen Teile sind stets Gewichtsteile. Die Messung der MFI-Werte erfolgte gemäß DIN/ISO 1133 bei 190°C mit einem Auflagegewicht von 2,16 kg. Prozentangaben sollen als Gewichtprozente verstanden werden, falls nichts anderes angegeben ist.

Die reduzierten spezifischen Viskositäten (RSV) wurden zusätzlich bei einer Temperatur von 140 °C an einer 0,5 gew.-%-igen Lösung der Polymeren in γ-Butyrolacton gemessen, das 2 Gew.-% Diphenylamin als Stabilisator enthielt.

### Beispiele 1 bis 4

96,6 Teile Trioxan wurden mit 3,4 Teilen Dioxolan und den in der Tabelle angegebenen Mengen an Methylal vermischt. 100 g dieser Mischung wurden in eine auf 80 °C temperierte, getrocknete Aluminiumtube eingegeben. Die Tube wurde verschlossen und in einem Wasserbad bei einer Temperatur von 80 °C über eine Zeit von 10 min getempert. Danach wurde 1 ml einer Initiatorlösung aus Trifluormethansulfonsäure gelöst in Diethylglykoldiethylether mittels einer Spritze zugegeben. Die Polymerisationslösung wurde kräftig geschüttelt, bis die Polymerisationsreaktion einsetzte. Nach Verfestigung der Reaktionsmischung wurde die Aluminiumtube noch weitere 30 min bei der Reaktionstemperatur von 80 °C gelagert. Anschließend wurde die Probe abgekühlt, zerkleinert und mit Methanol ausgekocht. Das isolierte Polymer wurde bei einer Temperatur von 130 °C in Dimethylformamid in Gegenwart von 500 ppm Triethanolamin in Lösung gebracht. Nach einer Verweilzeit von 30 min wurde die Lösung wieder abgekühlt, wobei das Polymer als Niederschlag ausfiel. Nach Filtration, Isolierung und Trocknung des Polymeren wurden die in der folgenden Tabelle aufgeführten Meßwerte bestimmt:

**Tabelle**

| Beispiel | Methylal [ppm] | RSV-Wert [dl/g] | MFI-Wert [g/10 min] |
|---|---|---|---|
| 1 | 3000 | 0,30 | 305 |
| 2 | 4000 | 0,29 | 932 |
| 3 | 5000 | 0,234 | 1560 |
| 4 | 7000 | 0,191 | > 3360 |

### Beispiel 5

Es wurden 10 Gew.-% eines Copolymeren aus 97 % Trioxan und 3 % Dioxolan mit einem MFI (190/2) von 9 g/10 min unter Stickstoff mit 100 Teilen eines Methanol/Wasser-Gemisches (90/10 Gew.-%) gemischt, das 500 ppm Triethylamin enthält. Das erhaltene Gemisch wird 10 min lang auf eine Temperatur von 170°C erhitzt, wobei das Copolymer in Lösung geht. Diese Lösung wird innerhalb von 30 min durch ein Tauchrohr in 30 Teile eines Methanol/Wasser-Gemisches (90/10 Gew.-%) eingeleitet, das sich in einem Autoklav in turbulenter Bewegung befindet und eine Temperatur von 125°C aufweist. Nach weiteren 10 min wird die erhaltene Suspension auf Raumtemperatur abgekühlt. Die Suspension wird durch Zentrifugieren mit Hilfe einer Siebzentrifuge (Siebweite 70 µm) in Feststoffanteile mit Partikeldurchmesser oberhalb 70 µm und < 70 µm aufgetrennt. Aus dem Zentrifugat wird dann das feinteilige Polymer (Feinanteil) durch Trocknung bei 110°C unter Inertgasatmosphäre gewonnen. Der MFI-Wert des Feinanteils beträgt 185 g/10 min.

### Beispiel 6

Beispiel 5 wurde wiederholt, mit dem einzigen Unterschied, daß anstelle des Trioxan-Dioxolan-Copolymeren mit einem MFI von 9 g/10 min ein Polymer gleicher chemischer Zusammensetzung mit einem MFI von 13 g/10 min benutzt wurde. Der nach Trocknung bei 110°C unter Inertgas des Feinanteils gemessene MFI-Wert des Feinanteils betrug 340 g/10 min.

### Beispiel 7

Beispiel 5 wurde wiederholt, wobei anstelle des Trioxan-Dioxolan-Copolymeren mit einem MFI von 9 g/10 min ein Polymer gleicher chemischer Zusammensetzung mit einem MFI von 32 g/10 min benutzt wurde. Der MFI-Wert des Feinanteils beträgt > 1000 g/10 min.

## Patentansprüche

1. Formmasse aus linearen Acetalhomo- oder -copolymeren und üblichen Zusatzstoffen, dadurch gekennzeichnet, daß der Schmelzflußindex MFI bei 2,16 kg Auflagegewicht und 190°C Meßtemperatur ≧ 150 g/10 min beträgt.

2. Formmasse nach Anspruch 1, dadurch gekennzeichnet, daß die Polymeren eine reduzierte spezifische Lösungsviskosität ≦ 0,3 dl/g, gemessen in γ-Butyrolacton in einer Konzentration von 0,5 g/100 ml bei 140°C aufweisen.

3. Formmasse nach Anspruch 1 oder 2, dadurch gekennzeichnet, daß sie bis zu 10 Gew.-% andere übliche Zusatzstoffe enthält, bezogen auf das Gesamtgewicht der Formmasse.

4. Formmasse nach einem oder mehreren der Ansprüche 1 bis 3, dadurch gekennzeichnet, daß ihr Schmelzflußindex MFI im Bereich von 170 bis 3000 g/10 min und insbesondere im Bereich von 300 bis 1600 g/10 min liegt.

5. Formmasse nach einem oder mehreren der Ansprüche 1 bis 4, dadurch gekennzeichnet, daß sie als Zusatzstoffe Stabilisatoren, Nukleierungsmittel, Antistatika, Licht- und Flammschutzmittel, Gleit- und Schmiermittel, Weichmacher, Pigmente, Farbstoffe, optische Aufheller, Verarbeitungshilfsmittel oder Verstärkungsmittel entweder alleine oder in Kombination enthält.

6. Verfahren zur Herstellung von Formmassen nach einem der Ansprüche 1 bis 5 durch Polymerisation von Formaldehyd und/oder Trioxan mit bis zu 10 Mol% von Comonomeren, dadurch gekennzeichnet, daß als Regler Verbindungen wie Dimethoxymethylen- oder Diethoxymethylen-O-CH₂-CH₃ in einer Menge von wenigstens 500 ppm, bezogen auf das Gesamtgewicht des Reaktionsansatzes, zugesetzt werden.

7. Verfahren nach Anspruch 6, dadurch gekennzeichnet, daß als Comonomer ein zyklisches Acetal verwendet wird, vorzugsweise Dioxolan oder Butandiolformal und/oder ein zyklischer Ether.

8. Verfahren zur Herstellung von Formmassen nach einem der Ansprüche 1 bis 5 durch fraktionierte Fällung einer erhitzten Lösung des Polymeren in einem Lösemittel, dadurch gekennzeichnet, daß beim Abkühlen der erhitzten Polyoxymethylenlösung eine Fraktion fester Polymerpartikel mit einem mittleren Korndurchmesser von vorzugsweise ≦ 70 µm gebildet wird, daß diese gebildete Fraktion dann durch Filtrieren, Zentrifugieren oder Dekantieren abgetrennt und aus dem Filtrat, Zentrifugat oder Dekantat isoliert wird und daß von der isolierten Fraktion anschließend durch Gefriertrocknung, Sprühtrocknung, Vakuumverdampfung Kontakttrocknung, Wirbelschichttrocknung oder durch eine Kombination verschiedener Trocknungsverfahren das restliche Löse- oder Dispersionsmittel entfernt wird.

9. Verwendung von Formmassen nach einem der Ansprüche 1 bis 5 zur Herstellung von Spritzgußteilen.

10. Verwendung von Formmassen nach einem der Ansprüche 1 bis 5 zur Verarbeitung in feinen Extrusions- oder Spinndüsen.
